# EUROPEAN PATENT SPECIFICATION

(11) **EP 1 366 588 B1**
(45) Date of publication and mention of the grant of the patent: **24.10.2007**
(21) Application number: 02704016.1
(22) Date of filing: 11.03.2002
(51) Int. Cl.: H04J 14/02, H04B 10/20, H04B 10/213

(54) **A FLEXIBLE WDM RING NETWORK**
FLEXIBLES WDM-RINGNETZWERK
RESEAU EN ANNEAU WDM FLEXIBLE

(30) Priority: 09.03.2001 SE 0100808; 04.05.2001 US 288432 P
(43) Date of publication of application: 03.12.2003
(73) Proprietor: Transmode Holding AB, 126 53 Hägersten (SE)
(72) Inventor: ÖBERG, Magnus, S-129 40 Hägersten (SE)
(74) Representative: Rosenquist, Per Olof
(86) International application number: PCT/SE2002/000442
(87) International publication number: WO 2002/073856

(56) References cited:
- EP-A1- 1 158 712
- EP-A2- 0 100 910
- EP-A2- 1 065 820
- WO-A1-00/08791
- WO-A1-00/76105
- WO-A1-01/22629
- WO-A1-98/04058

## Description

### TECHNICAL FIELD

The present invention relates to a flexible WDM ring network allowing selectable connections between client equipments connected to nodes of the network.

### BACKGROUND

In optical fiber networks for communicating information wavelength division multiplexing (WDM) is a method used to transport several independent optical signals simultaneously on a single optical fiber. WDM can be used for point-to-point communication where two nodes, one connected to each end of the fiber, are connected to each other, or for multipoint-to-multipoint communication where several nodes share the transmission capacity on one fiber or one pair of fibers. In the case of multipoint-to-multipoint communication each fiber usually forms a closed loop, i.e. a continuous ring, in order to provide two different routes between a certain pair of nodes in the case of fiber or other equipment failure. Bus networks in which the end nodes are located on different places are also possible. An example of an add-drop node in such a ring or bus WDM network is disclosed in the published European patent application EP 0905936 A2.

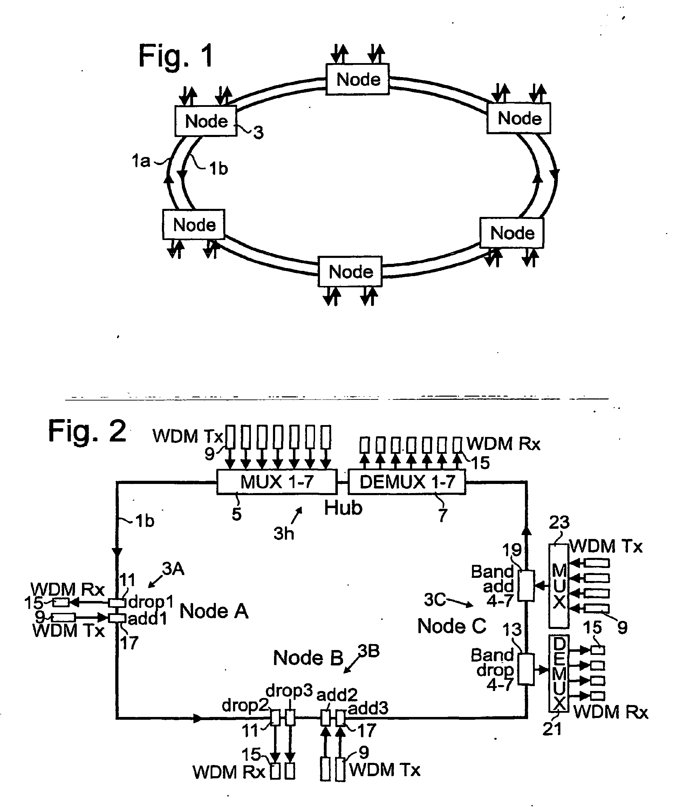

In Fig. 1 a schematic of a typical WDM ring network is shown. The signals carrying information, i.e. the traffic, in the two fibers propagate in opposite directions. Typically the traffic pattern high up in the network hierarchy (core rings) is meshed, i.e. each node has a direct access to each of most of other nodes connected in the ring via a dedicated wavelength channel. Further down in the network hierarchy, closer to the end user (access rings), the traffic pattern is typically hubbed, i.e. one central node, the hub or main node, has a direct connection to every other small node, also called a satellite node, through a dedicated wavelength channel for each satellite node. No wavelength channels are assigned to the satellite nodes for transmitting signals directly between the satellite nodes. An example of a hubbed WDM ring is shown in Fig. 2. in which only one fiber ring is drawn for clarity. Normally, two fiber rings carrying signals propagating in opposite directions are arranged for providing redundancy in the case of a break of a fiber link included in the two fiber rings. Optical filters and other typical components etc. are separately arranged for each fiber ring.

The light emitting elements, usually semiconductor lasers, in the hub node transmit light on one specific wavelength channel each. In the example of Fig. 2 seven transmitters in the hub transmit light in wavelength channels Nos. 1 - 7. All these signals are optically multiplexed onto the ring fiber in the multiplexer of the hub node to provide a composite light signal propagating along the ring fiber to node A, to which the signal in channel No. 1 is directed and is there dropped in a drop filter No. 1 to be communicated into a short fiber length or drop fiber connected to the WDM receiver (Rx) in that node. The drop filter No. 1 demultiplexes channel 1 from the composite signal and provides it to the drop fiber with a low optical loss and also blocks the light of channel No. 1 from propagating further along the ring fiber. The signals of all other wavelength channels pass through the drop filter No. 1 along the ring fiber with a low optical loss. The response from node A to the hub node is sent by a WDM transmitter (Tx), such as a laser in node A, as a light signal in the same wavelength channel No. 1. This signal in wavelength channel No. 1 is added with a low loss in an add filter No. 1 to the composite light signal propagating in the ring fiber. The signals of all channels except that of channel No. 1 pass through the add filter along the ring fiber with a low optical loss.

In the same manner signals of channels Nos. 2 and 3 are dropped by the drop filters Nos. 2, 3 in node B, and the response signals from the node B are transmitted in the same wavelength channels and are added to the traffic in the ring fiber in add filters Nos. 2, 3.

In node C the same basic function is performed for signals in channels Nos. 4 to 7, but in this case a single band drop filter No. 4-7 that covers the total wavelength range of these channels Nos. 4 - 7 is used to simultaneously drop all four channels from the traffic in the ring fiber. These four channels are then demultiplexed in a demultiplexer into individual wavelength channels and are then received by the WDM receivers. In the same manner the signals transmitted from the WDM transmitters in wavelength channels No. 4 to 7 are first multiplexed to form a first composite signal which is then added to the composite signal propagating in the ring fiber by a band add filter Nos. 4 - 7.

The advantage of using band drop and band add filters in nodes which use more than a few wavelength channels is that the optical loss for signals in the channels passing transparently through that node, the express channels, is minimized. This is described in the cited European patent application 0905936.

As mentioned above usually two ring fibers are provided in a WDM ring network, one for each direction of propagation. The signal from a satellite node is then usually not added on the same fiber as that on which the signal from the hub node is received, but rather the signal from the satellite node is sent back on the other ring fiber to the hub node, i.e. it will propagate along a path parallel to that of the signal received in the satellite node. The other path which also is a response path and continues on the ring fiber in which the signal from the hub is received, as described above with reference to Fig. 2, is normally used only for protection purposes. It is thus used in the case where the parallel return path cannot be used for some reason.

Up to date, the optical connections in WDM networks have been fixed, i.e. once a certain transmitter laser has been brought into use the location of the receiver is also decided.

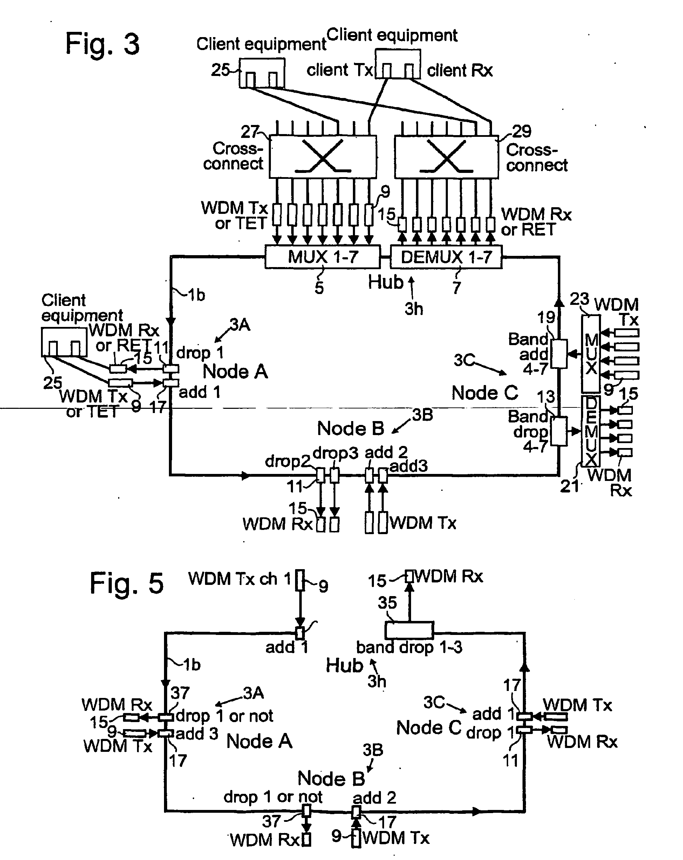

If routing is needed this has so far been achieved by cross connections before the signal reaches the transmitting elements. An example of such a network having flexible connections is illustrated by the diagram of Fig. 3. Here it is assumed that N client equipments in the hub can communicate with N other client equipments connected to different satellite nodes. In Fig. 3 N = 7. There should be one client equipment for every WDM transmitter/receiver pair in the network, but only a few are drawn in the figure for clarity.

If a cross-connect element of size NxN, i.e. having N input ports and N output ports, is connected between the client transmitters and the WDM transmitters, alternatively transmit end transponders, TETs, every client transmitter can be connected to any WDM transmitter and thus via the fixed wavelength routing function in the WDM ring reach any WDM receiver in the network and the respective client receiver connected thereto.

The signals from each transmitter in the satellite nodes are wavelength routed via the WDM ring network to a respective WDM receiver, alternatively a receive end transponder, RET, in the hub node. If a cross-connect element of size NxN is connected between the WDM receivers or receive end transponders and the client receivers in the hub node, the signals received by every WDM receiver in the hub can be forwarded to every client receiver in the hub node and thereby the signals from every WDM transmitter in the satellite nodes can reach every client receiver in the hub node.

In this way the cross-connect elements in the hub allow a flexible bi-directional connection from any client equipment in the hub node to any client-equipment in the satellite nodes.

The location of the client equipment does not necessarily have to be in the hub node. Such client equipment can be placed further away and via other e.g. optical networks have its signals communicated with the hub.

The cross-connect elements can be either all optical, or comprise an electrical switch core.

In the published European patent application No. 1 065 820 for Lucent Technologies, inventors Korotky and Veselka, WDM ring networks are disclosed including network elements having an add/drop capability, no network element being special or acting as a hub. In particular, the add/drop elements can have a broadband coupler connected directly in the fiber ring for dropping and adding wavelength channels.

In the published International patent application No. WO 00/76105 for Astral Point Communications, inventors Hutchison and Miller, a WDM optical communication system is disclosed that have plural nodes interconnected by optical fiber lengths to form e.g. a ring, but in the system there is no node that is special or acts as a hub. In the nodes band drop filters are used for dropping wavelengths within one or more adjacent wavelength bands, each wavelength band including the wavelengths of plural individual wavelengths assigned to the channels.

In the published European patent application No. 1 009 120 for Nortel Networks, inventors Danagher, Solheim and Somani, a multichannel optical add/drop multiplexer/demultiplexer OADM to be used in an optical WDM network that can be ring type is disclosed. The OADM can comprise a demultiplexer acting as a band drop filter filtering out plural adjacent wavelength channels and allowing the rest of the wavelength channels pass through the demultiplexer.

In the published International patent application No. WO 00/08791 for Ciena Corporation Point Communications, inventor Pelekhaty, and the published International patent application No. WO 98/04058 for Telefonaktiebolaget LM Ericsson, inventors Öberg, Johansson and Egnell, WDM optical communication networks are disclosed that have plural nodes interconnected by optical fibers to form a ring, one of the nodes acting as a hub. Each of the other nodes uses the same wavelength channel for both its transmitted and received traffic with the hub node.

### SUMMARY

It is an object of the invention to provide a flexible WDM ring network in which connections between client equipments connected to a main node and any of client equipments connected to any of satellite nodes of the network can be established as desired or selected.

It is another object of the invention to provide a flexible WDM ring network having a hub node that can be integrated in a meshed network.

In a WDM ring network having a main node, e.g. a network of the hubbed type, a client equipment connected to the main node can communicate with a client equipment connected to any of the satellite nodes, using a number of wavelength channels equal to the number of client equipments in the satellite nodes and selecting the wavelength channel used by means of a tunable optical transmitter or single channel band pass filter selecting the wavelength channel used for the communication. Instead of the tunable elements, "drop or not" optical drop filters can be used.

Thus, in such a network flexible connections are achieved in a WDM network elements.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
- Fig. 1 is a block diagram of a general optical WDM ring network having protection,
- Fig. 2 is a diagram of one of the ring paths in a hubbed optical WDM ring network,
- Fig. 3 is similar to Fig. 2 but also illustrating client equipment connected to a hub node through cross-connect elements,
- Fig. 4a is a schematic in accordance with the invention of one of the ring paths of a hubbed optical WDM network in which a tunable transmitter is arranged to allow flexible connections between client equipment connected to a hub node and client equipment connected to satellite nodes,
- Fig. 4b is a schematic similar to Fig. 4a in which the hubbed network is part of a meshed network,
- Fig. 4c is a schematic similar to Fig. 4a comprising three hubbed networks forming a meshed network,
- Fig. 5 is a schematic, in accordance with the invention, similar to Fig. 4a but in which "drop or not" filters are arranged instead of the tunable transmitter,
- Fig. 6 is a schematic, in accordance with the invention, similar to Fig. 4a but in which tunable, single channel band pass filters are arranged instead of the tunable transmitters,
- Fig. 7 is a schematic, in accordance with the invention, similar to Fig. 4a but in which two client equipments are connected to the hub node, and
- Fig. 8 is a schematic similar to Fig. 7 but in which tunable, single channel band pass filters are arranged and no tunable transmitters.

### DETAILED DESCRIPTION

The general structure of a typical WDM ring network is shown in the diagram of Fig. 1. There are two parallel ring paths 1a, 1b of optical fibers carrying light signals propagating in opposite directions. In each fiber ring the light comprising the signals is called the traffic in the path. In each fiber ring the signals are transferred in a plurality of distinct wavelength bands or wavelength channels. In the ring paths a plurality of nodes 3 are connected, the nodes also called add/drop nodes. In each such node signals are taken or dropped from the traffic in at least one of the ring paths and signals are provided or added to the traffic in at least one of the ring paths. For the illustrated case where two parallel ring paths carry traffic in opposite directions for allowing bidirectional communication between the nodes, redundancy or protection is obtained. Thus, for transmission from a sending node to a receiving node two paths can be used, a first path being part of a first one of the fiber rings and a second path being part of the second fiber ring, the second path corresponding to the part of the first ring which is not used for the first path. Normally only one of the first and second paths is used, the other one only used for protection and thus used only when the first path is in failure.

One of the nodes in the WDM network can be a main node, called a hub node hereinafter, and then the other nodes do not communicate directly with each other but only with the hub node. Thus, in the hub node signals of all wavelength bands used for the flexible connections in the network are dropped and added. This is illustrated for one of the parallel ring paths by the diagram of Fig. 2. In the hub node 3h an optical multiplexer 5 and an optical demultiplexer 7 are connected in each fiber ring, the demultiplexer being connected downstream the multiplexer. The fiber rings can be broken between the demultiplexer and multiplexer, since there is no useful traffic carrying signals through the hub node provided that the traffic in the network is purely hubbed. If the described network is part of a larger network using a meshed traffic pattern, the fibers between the demultiplexer 7 and the multiplexer 5 are not allowed to be broken. In the multiplexer the traffic for the fiber ring is injected and in the demultiplexer all traffic in the fiber is dropped. Still there is redundancy since each other node 3A, 3B, ..., called a small node or satellite node, can communicate with the hub through two different paths using the two parallel fiber rings, only one of which is shown in Fig. 2.

In the nodes light emitting elements or light transmitters 9, usually semiconductor lasers, are used for generating the light signals added to the traffic or injected in the respective fiber path. The light transmitters are WDM transmitters transmitting on one individual wavelength channel each. The transmitters 9 in the hub are all connected to the multiplexer 5, which adds the signals received from the transmitters to provide a composite light signal forming the initial traffic in the ring fiber. In the satellite nodes drop filters 11, 13 are used for dropping signals in a specific wavelength channel or all signals in a plurality of adjacent wavelength channels respectively, the first type of drop filters 11 also called single channel drop filters and the latter type of drop filter 13 called band drop filters. The drop filters 11, 13 can for example be thin-film interference filters or fiber-Bragg-gratings combined with optical circulators. In each drop filter the signals of one or more channels are thus deflected to be detected or received by light receiving elements 15 such as suitable semiconductor diodes, each light receiving element receiving only light of a specific wavelength channel.

The signals from the satellite nodes 3A, 3B, ... to the hub node 3h originate from the light emitting elements 9 in the satellite nodes and are added to the traffic in the ring path through light adding elements 17, 19, also called add couplers or add filters, some add filters 17 adding only signals of a single channel and other ones 19 adding signals of several adjacent wavelength channels. In a satellite node usually the same wavelength channels are dropped and added. The signals of the wavelength channel or channels dropped and added in a node are blocked in the composite signal passing through the node in the ring path by the drop filters and/or add filters of the node.

In a satellite node such as node 3C in Fig. 2 for dropping and adding adjacent wavelength channels a band drop filter 13 is used for producing a composite signal comprising the signals of all these adjacent channels. This composite signal is transmitted to a demultiplexer 21 splitting the composite signal into signals for each received wavelength channel and providing these signals to the light receivers 15. In such a node the signals from the light emitting elements 9 are combined in a multiplexer 23 to provide a composite signal comprising signals of the adjacent wavelength channels which are added to the traffic in the ring path in the band add filter 19.

Finally, in the demultiplexer 7 of the hub node the incoming traffic is split in all the wavelength channels to provide light of the distinct wavelength channels to light receiving elements or light receivers 15.

In Fig. 3 an optical WDM hubbed network allowing routing is illustrated, the optical connections being fixed, i.e. the wavelengths used by the wavelength selective elements are defined by the physical installation. Client equipments 25 connected to the hub 3h communicate with client equipments connected to different satellite nodes 3A, 3B, ..., each client equipment connected to the hub node communicating only with a single one of the client equipments connected to the satellite nodes. Cross-connect elements 27, 29 are connected in the hub node between the client equipments and the light transmitting elements 9 and the light receiving elements 15 respectively, one cross-connect element 27 used for transmitting from the hub node to the ring path and the other one used for receiving in the hub node. The light emitters 9 are also called transmit end transponders, TETs, in the case where they use optical signals both for input and output. The light receivers 15 are in the same way called receive end transponders, RETs, in the case where they use optical signals both for input and output. The cross-connect elements 27, 29 are basically switches having the same number of input and outports and allow, as commanded by control signals, to connect any of its inputs to any of its outport ports.

However, it appears that flexible connections in an optical WDM ring network can be achieved without using the cross-connect elements as shown in Fig. 3.

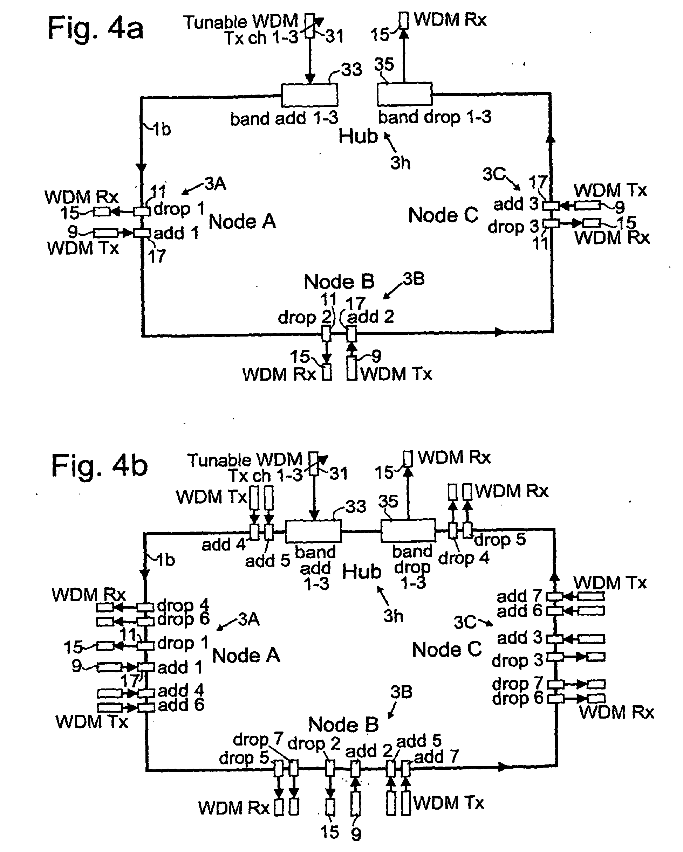

Thus, in Fig. 4a a part of such a flexible WDM network is shown. Only the fiber ring carrying traffic in the anti-clockwise direction and its associated components are shown. As mentioned above usually also another fiber ring carrying traffic in the clockwise direction is provided. Only the elements that enable the flexible connections are shown. Fixed optical connections as illustrated in Fig. 2 and 3 can be used at all wavelength channels not being used for the flexible connections between any pair of nodes.

The key elements in this first embodiment of a flexible WDM network are a wavelength tunable transmitter laser 31 such as the DBR-laser product NYW-35 from ADC/Altitun connected in the hub node, a band add filter 33 in the hub node and a band drop filter 35 in the hub. The design of the satellite nodes is similar to that described with reference to the networks of Fig. 2 and 3 having only fixed optical connections.

The tunable transmitter laser 31 can emit signals at either one of three adjacent wavelength channels having Nos. 1, 2 and 3. Irrespective of the wavelength channel chosen it is added with a low loss in the ring fiber by the band add filter 33. The signal of the chosen channel is dropped when it reaches a drop filter 11 for the same wavelength channel and passes all other drop or add filters with a low loss. In the figure a receiver 15 in node 3A is reached if channel No. 1 is chosen, in node 3B if channel No. 2 is chosen and in Node C if channel No. 3 is chosen. In this way a client equipment, not shown in Fig. 4a, that is connected to the tunable laser 31 in the hub node can reach any of these destinations.

If for example the receiver 15 in node 3B receives the signal, it will turn its WDM transmitter 9 on and a signal such as a response from the node will consequently, be also transmitted on channel No. 2. The other transmitters in the satellite nodes used for this type of flexible connection are in an off-state, not active, since their corresponding or associated receivers have no input signals. Thus only channel No. 2 will be dropped in the band drop filter 35 in the hub node, and reach the WDM receiver 15 or RET connected thereto. In this way a client equipment that is in a fixed way connected to the tunable laser 31 and the WDM receiver 15 connected to the band drop filter 35 in the hub, will automatically receive the response signal from the satellite node addressed by the wavelength of the tunable laser. No cross-connecting is thus required. The number of possible channels can be varied by changing the band width the band add filter 33 and the band drop filter 35 and by changing in the corresponding way the tuning range of the laser 31.

The network of Fig. 4a can advantageously, like other networks to be described below, be used integrated in a larger network having meshed connections. Plural such hubbed networks can simultaneously be parts of a meshed network. In such a larger network the fiber path continues uninterrupted through the hub node to form a genuine ring path, as is illustrated by the network of Fig. 4b. There, the hub node 3h also communicates with the nodes 3A, 3B on channels Nos. 4 and 5 respectively, the node 3A communicates also with the node 3C on channel No. 6 and the node 3B also communicates with the node 3C on channel No. 7.

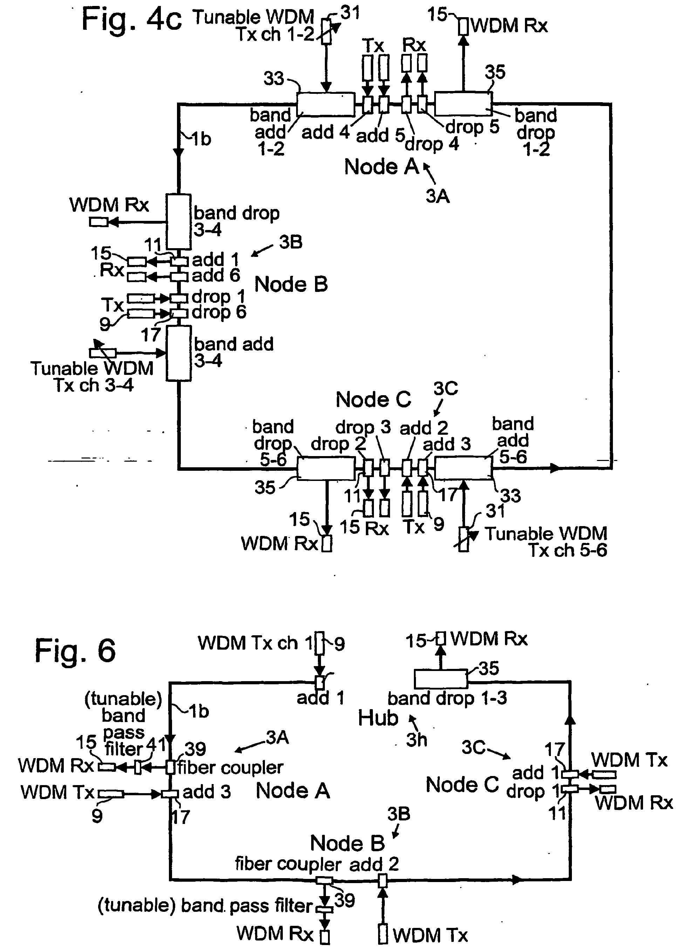

In the network of Fig. 4c three nodes A, B and C are connected in a single ring path 1b. All the nodes A, B and C, 3A, 3B and 3C, are here hub nodes of networks of the kind illustrated in Fig. 4a. The combined network thus forms a meshed network. For the network having node 3A as a hub node, the hub node transmits from a tunable WDM transmitter 31 on channel No. 1 or 2. The signal from the transmitter 31 is added to the traffic in the closed fiber path 1b by a band add filter 33 and is received in node 3B, if the signal is in channel No. 1, by a drop filter 11 connected to a receiver 15. In the case where the signal is carried in channel No. 2, it is received in the node 3C by a receiver 15 connected to a drop filter 11. In the opposite directions, signals from node 3B to the hub node are transmitted from transmitter 9 in channel No. 1, are added to the traffic in the ring path 1b by an add filter 17 and are received in the hub node 3A by a receiver 15 connected to a band drop filter 35 for dropping channels Nos. 1 and 2. For the network having the node 3B as the hub node, the traffic between the hub node and the node 3A is carried in channel No. 4 and the traffic between the hub node and the node 3B in channel No. 3. For the network having the node 3C as the hub node, the traffic between the hub node and the node 3A is carried in channel No. 5 and the traffic between the hub node and the node 3B in channel No. 6.

In a second embodiment of a flexible WDM network, see Fig. 5, the wavelength tunable laser in the hub node is replaced by a laser emitting on a fixed wavelength as in the networks illustrated in Figs. 2 and 3, and the fixed drop filters in the satellite nodes, except in the last satellite node, are replaced by remotely controllable "drop or not" filters 37. The function of a "drop or not" filter is identical to that of a normal drop filter when such a filter is in the drop position or drop state, i.e. one wavelength is dropped and does not continue along the ring fiber and all other wavelengths pass the filter with a low optical loss. In the "not" position no wavelength channel is dropped and thus all wavelengths pass the filter with a low loss. Such "drop or not" filters are e.g. manufactured by Corning Inc., product series Pure Path WMS, and comprise a movable dielectric multiple interference filter where one part of the filter is a standard band pass filter and another part is a non-selective mirror.

As seen in the figure, the signal from the transmitter 9 in the hub node is always emitted on wavelength channel No. 1 which thus is a fixed channel for transmitting from the hub node, is added to the traffic in the ring fiber by a fixed add filter or even any other type of combiner or multiplexer and propagates in the ring fiber until it reaches the "drop or not filter" 35 in the satellite node 3A. If this filter is in the "drop" position the signal reaches the WDM receiver 15 of this node and is forwarded to the client equipment, not shown, connected to the node. If the "drop or not filter" 37 of node 3A is in the "not" position the signals of channel No. 1 and of all other wavelengths pass the node to the next satellite node where the same choice can be made. If all intermediate "drop or not filters" are in the "not" position the hub signal reaches the fixed drop filter in the last node and is dropped there. The reasons for providing a fixed filter in the last satellite comprise 1) saving costs, b) saving wavelengths since channel No. 1 can be used again by the transmitter in the last node. In this way the signal sent from transmitter 9 in the hub can reach one of the nodes 3A, 3B or 3C, as selected by the states of the "drop or not filters" 37 in the nodes 3A, 3B.

If a satellite node receives a signal in channel No. 1, it turns on its associated, fixed wavelength transmitter laser 9. Channel No. 1 cannot be reused for transmitting signals in the same direction in the ring fiber since an add filter for channel No. 1 would block the possibility for the channel No. 1 from the hub to propagate to another satellite node connected downstream. Thus channel No. 1 cannot be reused before it is certain that this channel is blocked, which means that only the last satellite node can use that wavelength for transmission to the hub node. This last node thus always blocks channel No. 1 and the second last node, in the figure node 3B, has to use another wavelength e.g. channel No. 2 for response transmission to the hub node. This means that the transmitter 9 and the add filter 17 in node 3B transmit and add signals respectively only in channel No. 2. Now the channels Nos. 1 and 2 block all signals in these channels from being used by satellite nodes upstream the node 3B and thus node 3A has to use another wavelength, e.g. wavelength channel No. 3 for transmission. Advantageously the transmitters 9 of the satellite nodes transmit in neighbouring channels since then all these channels can be dropped in the hub node using a single band drop filter 35 as in the network of Fig. 4a. Since only one of the transmitters 9 in the satellite nodes is switched on or operating at a time only one band drop filter and only one WDM receiver 15 are needed in the hub node.

In this way a flexible connection between the hub node 3h and one of the satellite nodes 3A, 3B, ... can be obtained in the network in Fig. 5. Possibly, also the last satellite node, i.e. the satellite connected most-downstream in the ring path, in the embodiment of Fig. 5, node 3C, can have a "drop or not" filter, instead of the fixed drop filter shown in order to facilitate future addition of satellite nodes downstream. In that case the transmitter wavelength of that node (C), shall not be the same as the "drop or not" wavelength used for transmission from the hub node. Then the band drop filter 35 in the hub has to be changed accordingly to also drop the channel used for transmission from the last satellite node.

As an alternative, the "drop or not" filters can have a wider wavelength range covering more than one wavelength channel. Then the "drop or not" filters must be followed, at the receiver sides in the nodes, by demultiplexers as illustrated for node 3C in Figs. 2 and 3.

In a third embodiment of a flexible optical WDM ring network the "drop or not" filters used in the network illustrated in Fig. 5 are replaced by optical couplers and single channel band pass filters, see Fig. 6.

The optical couplers 39 used are not wavelength selective. In a typical fiber coupler a fraction of the total light power is branched, i.e. a fraction of .all signals is jointly deflected towards the receiver 15 in the respective satellite nodes and another fraction of the total light power incoming to the couplers continues along the ring fiber, i.e. the other fraction of the signals passes the coupler to continue along the ring fiber. Furthermore, a single channel band pass filter 41 is connected between a coupler 39 and the WDM receiver 15 of a satellite node and allows signals of only one channel to pass to the receiver, all other wavelengths being blocked. In the example illustrated in Fig. 6 only channel No. 1 passes the couplers 39 and the add filters 17 of the satellite nodes, with a low optical loss. In this way signals of channel No. 1 are received simultaneously in all satellite nodes, i.e. the signals of channel No. 1 are broadcasted in the ring. The communication from the satellite nodes to the hub node is identical to that illustrated in Fig. 5. In other words, any of the satellite nodes 3A, 3B, ... can choose to listen to signals from the hub node, but only one at a time can respond and transmit to the hub node, observe in particular the single receiver 15 in the hub node.

The signals of channel No. 1 can be received in the last satellite node (3C) by either a combination of a fiber coupler and a single channel band pass filter as in the other satellite nodes, or by a fixed wavelength selective drop filter 11 of the type used in nodes 3A, 3B in the networks of Figs. 2, 3, such a fixed wavelength drop filter used in the network illustrated in Fig. 6.

If the single channel band pass filters 41 used in the flexible network shown in Fig. 6 instead would be tunable any of some wavelength channels signals transmitted from the hub node can be selectively received in the satellite nodes.

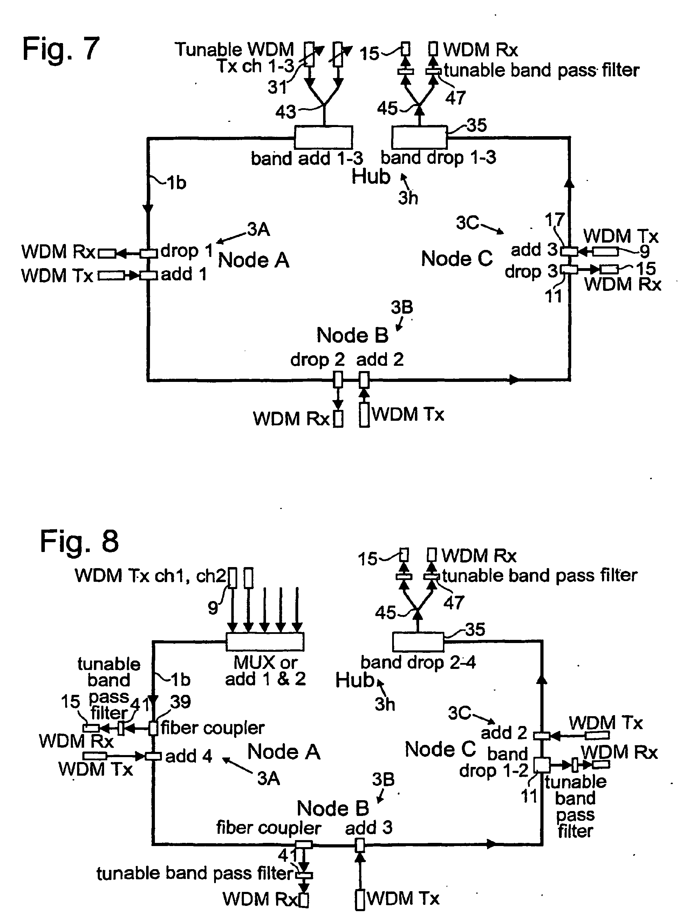

The common feature in all of the three embodiments of a flexible WDM network as described with reference to Figs. 4 - 6 (and also of the further embodiments to be described in conjunction with Figs. 7 - 8) is that a band drop filter covering more than one wavelength channel is used in the hub node in order to receive the signal from any one of the satellite nodes within the wavelength range of the band drop filter. Also, only one WDM receiver is connected in the hub node to receive signals from the band drop filter. In these network structures only one of the satellite nodes can at a time communicate directionally with the hub node. However, by applying some modifications as will be described below it is possible for the hub node to communicate simultaneously with several of the transmitters and receivers of the satellite nodes in a flexible way.

In Fig. 7 the same type of network as in Fig. 4a is shown, but with the difference that two tunable transmitters 31 and two receivers 15 are provided in the hub node.

The outputs of the two tunable transmitters 31 are combined in an ordinary optical coupler 43 having no wavelength selectivity. In this way the wavelengths used by the two transmitters can "cross" so that one of the two transmitters can sometimes e.g. transmit on channel No. 2 and sometimes the other transmitter can transmit on this wavelength. Client equipment, not shown in Fig. 6, that is connected to one of the tunable transmitters in the hub node can in this way reach any of the client receivers in the satellite nodes. Using two tunable lasers 31 in the hub node two different satellite nodes can be simultaneously reached without adding or changing the equipment in the satellite nodes as compared to the network of Fig. 4a and basically also as compared to that depicted in Fig. 2.

The simultaneous response signals from the WDM transmitters in two satellite nodes are dropped in the band drop filter in the hub node. An optical coupler 45 splits the dropped signals to continue in two output fibers. In each of the output fibers a single channel band pass filter 47 is connected to select the signals of one of the two wavelengths to let them continue to the WDM receiver 15 connected at the end of the fiber. The single channel band pass filters 47 are tunable and can select anyone, but at time only one, of the wavelength channels within the drop range of the band drop filter 35. Examples of tunable band drop filters are e.g. a scanning Fabry-Pérot etalon or a tunable fiber grating combined with an optical circulator.

Another way of obtaining several simultaneous flexible connections is illustrated by the network shown in Fig. 8.

This network is similar to that illustrated in Fig. 6, but here two receivers 15 are connected in the hub node, and, as in the embodiment of Fig. 7, a coupler 45 is connected to the output of the band drop filter 35 and the tunable, single channel band pass filters 47 are connected between the outputs of the coupler and the respective receivers 15. In this way the two receivers 15 of the hub node can receive anyone of the wavelength channels dropped by the band drop filter 35.

The single channel band pass filters 41 in the satellite nodes are tunable in order to select any single one of the wavelength channels present on the ring fiber. The last satellite node (3C) has a fixed band drop filter 11 in order to save optical power, and to block the selectable channels from propagating further along the ring fiber. This allows for transmitters in this satellite node to reuse the blocked wavelength channels.

The tunable, single channel band pass filters 47 and the fiber coupler 45 connected thereto in the hub node in the network of Figs. 7 and 8 can be replaced by tunable drop filters, not shown, connected directly in the ring fiber. The fiber couplers and tunable, single channel band pass filters in the satellite nodes in the networks illustrated in Figs. 6 and 8 can also be replaced by tunable, single channel drop filters, not shown, connected in the ring fiber path.

In all examples above any wavelength channels that have not been used for the flexible connections can be used for other flexible connections or for standard fixed WDM connections.

All networks described so far have had a hubbed traffic pattern. Obviously, the communication schemes used in the flexible networks described above can be used as part of a larger network having meshed connections. This requires that the ring fiber paths continue uninterrupted through the hub node.

In all cases above a WDM transmitter laser 9 can either be an WDM transmitter integrated with the client equipment itself or part of a transmit end WDM transponder that receives its input signal optically from the client equipment.

In all cases above a WDM receiver can either be a receiver integrated with the client equipment itself or be part of a receive end WDM transponder that receives the optical signal from the WDM network and retransmits it optically to the client equipment.

In all cases above, the wavelength widths of the band drop and add filters, and the tuning range of the lasers can be adjusted so that the number of client equipments appropriate for each case in the nodes can be reached.

## Claims

1. An optical WDM network for flexible connections comprising;
- at least one fiber ring path (1b),
- a main node (3h) connected in the ring path,
- satellite nodes (3A, 3B, 3C) connected in the ring path, each of the satellite nodes arranged to receive light signals carrying information in an individual, fixed wavelength channel from, the main node and to transmit, from a WDM transmitter (9) in the node, signals carrying information in the same individual, fixed wavelength channel to only the main node, each of said individual fixed wavelength channels being distinct from each other, and
- client equipment respectively, connected to the main node and to the satellite modes, and
**characterized in that** the main node (3h) comprises a band drop filter (35) having a drop range for dropping all of said individual, fixed and distinct wavelength champs to be fed to the client equipment connected to the main node.

2. An optical WDM network according to claim 1, **characterized in** one WDM receiver (15) connected to receive signals from the band drop filter (35) in the main node (3h).

3. An optical WDM network according to claim 1 or 2, **characterized by** a tunable optical transmitter (31) in the main node (3h) connected to allow the client equipment connected to the main node to communicate with the client equipments connected to any of the satellite nodes (3A, 3B, 3C), the tunable transmitter being controlled to select, for communication from the client equipment connected to the main node (3h) to the client equipment connected to any of the satellite nodes, that of said individual, fixed and distinct wavelength channels in which the respective satellite node is arranged to receive light signals from the main node.

4. An optical WDM network according to claim 3, **characterized, in that** said individual, fixed and distinct wavelength channels channels are adjacent.

5. An optical WDM network according to claim 3, **characterized in that** the client equipment connected to the main node (3h), for transmission from the client equipment, is connected through a tunable transmitter (31).

6. An optical WDM network according to claim 1 or 2, **characterized in that** a satellite node (3A, 3B, 3C) comprises an optical, single channel band pass filter (41) filtering out that of said individual, fixed and distinct wavelength channels in which the respective satellite node is arranged to receive light signals from the main node (3h).

7. An optical WDM network according to any of claims 3 - 6, **characterized in that** the nodes (3A, 3B, 3C, 3h) comprise transmitters (9, 31) and receivers (15) for transmitting and receiving light signals in said individual, fixed and distinct wavelength channels and further comprise drop elements (11,35) and add elements (17, 33) for dropping light signals in said individual, fixed and distinct wavelength channels from the light signals propagating along the ring path (1b) and transmitting them to the receivers in the nodes and for adding light signals in said individual, fixed and distinct wavelength channels the signals propagating along the ring path (1b).

8. An optical WDM network according to claim 2, **characterized in that** the client equipments connected to the satellites nodes (3A, 3B, 3C), for receiving from the client equipment connected to the main node (3h), are connected through tunable band pass filters (41), except possibly the last satellite node.

9. An optical WDM network according to claim 1, **characterized by** "drop or not" optical drop filters (37) connected to allow the client equipment connected to the main node (3h) to transmit to the client equipment connected to any of the satellite nodes (3A, 38, 3C), using that of said individual, fixed and distinct wavelength channels in which the respective satellite node is arranged to receive light signals from the main node (3h), the "drop or not" filters (37) being controlled to select the client equipment connected to one of the satellite nodes which is to receive transmission from the main node.

10. An optical WDM network according to claim 9, **characterized in that** the "drop or not" filters (37) are connected in the ring path (1b) in the plurality of the satellite nodes (3A, 3B, 3C).

11. An optical WDM network according to claim 1, **characterized in that** a plurality of client equipments are connected to the main node (3h), each of the plurality of client equipments, for transmission from the respective client equipment, being connected through an individual tunable transmitter (31), the outputs of the tunable transmitters being connected to an optical combiner (43).

12. An optical WDM network according to claim 1, **characterized in that** a plurality of client equipments are connected to the main node (3h), each of the plurality of client equipments, for receiving from the client equipments connected to the satellite nodes, being connected through an individual tunable band pass filter (47), the inputs of the tunable filter being connected to an optical splitter (45).

13. A meshed WDM network having nodes (3A, 3B, 3C, 3h) between which signals are communicated in a substantially meshed traffic pattern, **characterized in that** the meshed WDM network includes an optical WDM network according to any of claims 1-12.

## Patentansprüche

1. Optisches WDM-Netzwerk für flexible Verbindungen, umfassend:
- zumindest einen Faser-Ririgpfad (1b),
- einen in dem Ringpfad angeschlossenen Hauptknoten (3h),
- in dem Ringpfad angeschlossene Satellitenknoten (3A, 3B, 3C), wobei jeder der Satellitenknoten so angeordnet ist, dass er Informationen tragende Lichtsignale in einem individuellen, festen Wellenlängenkanal von dem Hauptknoten empfängt, und Informationen tragende Signale von einem WDM-Sender (9) in dem Knoten in dem gleichen individuellen, festen Wellenlängenkanal nur an den Hauptknoten überträgt, wobei die individuellen, festen Wellenlängenkanäle sich jeweils voneinander unterscheiden, und
- Endgeräte, die mit dem Hauptknoten bzw. mit den Satellitenknoten verbunden sind, und
**dadurch gekennzeichnet, dass** der Hauptknoten (3h) ein Drop-Bandfilter (35) enthält, das einen Abzweigbereich zum Abzweigen all derjenigen der individuellen, festen und unterschiedlichen Wellenlängenkanäle hat, die dem mit dem Hauptknoten verbundenen Endgerät zuzuführen sind.

2. Optisches WDM-Netzwerk nach Anspruch 1, **gekennzeichnet durch** einen WDM-Empfänger (15), der zum Empfangen von Signalen von dem Drop-Bandfilter (35) in dem Hauptknoten (3h) angeschlossen ist.

3. Optisches WDM-Netzwerk nach Anspruch 1 oder 2, **gekennzeichnet durch** einen einstellbaren optischen Sender (31) in dem Hauptknoten (3h), der angeschlossen ist, um dem mit dem Hauptknoten verbundenen Endgerät das Kommunizieren mit den mit jeglichem der Satellitenknoten (3A, 3B, 3C) verbundenen Endgeräten zu ermöglichen, wobei der einstellbare Sender so gesteuert ist, dass er für die Kommunikation von dem mit dem Hauptknoten (3h) verbundenen Endgerät an das mit jeglichem der Satellitenknoten verbundenen Endgerät denjenigen der individuellen, festen und unterschiedlichen Wellenlängenkanäle auswählt, in dem der jeweilige Satellitenknoten angeordnet ist, um Lichtsignale von dem Hauptknoten zu empfangen.

4. Optisches WDM-Netzwerk nach Anspruch 3, **dadurch gekennzeichnet, dass** die individuellen, festen und unterschiedlichen Lichtwellenkanäle benachbart sind.

5. Optisches WDM-Netzwerk nach Anspruch 3, **dadurch gekennzeichnet, dass** das mit dem Hauptknoten (3h) verbundene Endgerät zum Senden von dem Endgerät über einen einstellbaren Sender (31) verbunden ist.

6. Optisches WDM-Netzwerk nach Anspruch 1 oder 2, **dadurch gekennzeichnet, dass** ein Satellitenknoten (3A, 3B, 3C) ein optisches Einkanal-Bandpassfilter (41) enthält, das denjenigen der individuellen, festen und unterschiedlichen Wellenlängenkanäle ausfiltert, in dem der jeweilige Satellitenknoten angeordnet ist, um Lichtsignale von dem Hauptknoten (3h) zu empfangen.

7. Optisches WDM-Netzwerk nach einem der Ansprüche 3 - 6, **dadurch gekennzeichnet, dass** die Knoten (3A, 3B, 3C, h) Sender (9, 31) und Empfänger (15) zum Senden und Empfangen von Lichtsignalen in den individuellen, festen und unterschiedlichen Wellenlängenkanälen enthalten und ferner Abzweigelemente (11, 35) und Einfügelemente (17, 33) enthalten, zum Abzweigen von Lichtsignalen in den individuellen, festen und unterschiedlichen Wellenlängenkanälen aus den sich entlang dem Ringpfad (1b) ausbreitenden Lichtsignalen und zum Übertragen derselben an die Empfänger in den Knoten :und zum Einfügen von Lichtsignalen in die individuellen, festen und unterschiedlichen Wellenlängenkanälen zu den sich entlang dem Ringpfad (1b) ausbreitenden Lichtsignalen.

8. Optisches WDM-Netzwerk nach Anspruch 2, **dadurch gekennzeichnet, dass** die mit den Satellitenknoten (3A, 3B, 3C) verbundenen Endgeräte zum Empfangen von dem mit dem Hauptknoten (3h) verbundenen Endgerät durch einstellbare Bandpassfilter (41) verbunden sind, mit der möglichen Ausnahme des letzten Satellitenknotens.

9. Optisches WDM-Netzwerk nach Anspruch 1, **gekennzeichnet durch** optische Drop-Filter (37) der "drop-or-not"-Art, die verbunden sind, um dem mit dem Hauptknoten (3h) verbundenen Endgerät das Senden an die mit jeglichem der Satellitenknoten (3A, 3B, 3C) verbundenen Endgeräte zu ermöglichen, wobei derjenige der individuellen, festen und unterschiedlichen Wellenlängenkanäle verwendet wird, in dem der jeweilige Satellitenknoten angeordnet ist, um Lichtsignale von dem Hauptknoten (3h) zu empfangen, wobei die Drop-Filter der "drop-or-not"-Art (37) so gesteuert sind, dass sie das mit einem der Satellitenknoten verbundene Endgerät auswählen, das die Übertragung von dem Hauptknoten empfangen soll.

10. Optisches WDM-Netzwerk nach Anspruch 9, **dadurch gekennzeichnet, dass** die Drop-Filter der "drop-or-not"-Art (37) in dem Ringpfad (1b) in der Vielzahl der Satellitenknoten (3A, 3B, 3C) angeschlossen sind.

11. Optisches WDM-Netzwerk nach Anspruch 1, **dadurch gekennzeichnet, dass** eine Vielzahl von Endgeräten mit dem Hauptknoten (3h) verbunden ist, wobei jedes der Vielzahl von Endgeräten zum Senden von dem jeweiligen Endgerät durch einen individuellen einstellbaren Sender (31) verbunden ist, wobei die Ausgänge der einstellbaren Sender mit einem optischen Kombinierer (43) verbunden sind.

12. Optisches WDM-Netzwerk nach Anspruch 1, **dadurch gekennzeichnet, dass** eine Vielzahl von Endgeräten mit dem Hauptknoten (3h) verbunden ist, wobei jedes der Vielzahl von Endgeräten zum Empfangen von den mit den Satellitenknoten verbundenen Endgeräten durch ein individuelles einstellbares Bandpassfilter (47) verbunden ist, wobei die Eingänge des einstellbaren Filters mit einem optischen Verzweiger (45) verbunden sind.

13. Vernetztes WDM-Netzwerk mit Knoten (3A, 3B, 3C, 3h), zwischen denen Signale in einem im Wesentlichen vernetzten Verkehrsmuster übermittelt werden, **dadurch gekennzeichnet, dass** das vernetzte WDM-Netzwerk ein optisches WDM-Netzwerk nach einem der Ansprüche 1 - 12 enthält.

## Revendications

1. Réseau optique WDM pour connexions flexibles comprenant :
- au moins une voie de fibre en anneau (1 b),
- un noeud principal (3h) connecté dans la voie en anneau,
- des noeuds satellites (3A, 3B, 3C) connectés dans la voie en anneau, chacun des noeuds satellites étant agencé de façon à recevoir des signaux lumineux transportant des informations dans un canal de longueur d'onde individuel, fixe depuis le noeud principal et transmettre, depuis un transmetteur WDM (9) dans le noeud, des signaux transportant des informations dans le même canal de longueur d'onde individuel, fixe uniquement vers le noeud principal, chacun desdits canaux de longueur d'onde individuels, fixes étant distincts l'un de l'autre, et
- des équipements clients connectés respectivement au noeud principal et aux noeuds satellites, et
**caractérisé en ce que** le noeud principal (3h) comprend un filtre d'extraction de bande (35) ayant une plage d'extraction destinée à extraire l'ensemble des canaux de longueur d'onde individuels, fixes et distincts à délivrer à l'équipement client connecté au noeud principal.

2. Réseau optique WDM selon la revendication 1, **caractérisé par** un récepteur WDM (15) connecté de façon à recevoir des signaux provenant du filtre d'extraction de bande (35) dans le noeud principal (3h).

3. Réseau optique WDM selon la revendication 1 ou 2, **caractérisé en ce qu'**il comprend un transmetteur optique accordable (31) dans le noeud principal (3h) connecté de façon à permettre à l'équipement client connecté au noeud principal de communiquer avec les équipements clients connectés à l'un quelconque des noeuds satellites (3A, 3B, 3C), le transmetteur accordable étant commandé de façon à sélectionner, pour une communication de l'équipement client connecté au noeud principal (3h) à l'équipement client connecté aux noeuds satellites, celui parmi lesdits canaux de longueur d'onde individuels, fixes et distincts dans lesquels le noeud satellite respectif est agencé de façon à recevoir des signaux lumineux provenant du noeud principal.

4. Réseau optique WDM selon la revendication 3, **caractérisé en ce que** lesdits canaux de longueur d'onde individuels, fixes et distincts sont adjacents.

5. Réseau optique WDM selon la revendication 3, **caractérisé en ce que** l'équipement client connecté au noeud principal (3h), pour une transmission depuis l'équipement client, est connecté par l'intermédiaire d'un transmetteur accordable (31).

6. Réseau optique WDM selon la revendication 1 ou 2, **caractérisé en ce qu'**un noeud satellite (3A, 3B, 3C) comprend un filtre passe-bande monocanal optique (41) éliminant par filtrage celui desdits canaux de longueur d'onde individuels, fixes et distincts dans lequel le noeud satellite respectif est agencé pour recevoir des signaux lumineux provenant du noeud principal (3h).

7. Réseau optique WDM selon l'une quelconque des revendications 3 à 6, **caractérisé en ce que** les noeuds (3A, 3B, 3C, 3h) comprennent des transmetteurs (9, 31) et des récepteurs (15) destinés à transmettre et recevoir des signaux lumineux dans lesdits canaux de longueur d'onde individuels, fixes et distincts et comprennent en outre des éléments d'extraction (11, 35) et des éléments d'insertion (17, 33) pour extraire les signaux lumineux dans lesdits canaux de longueur d'onde individuels, fixes et distincts à partir des signaux lumineux se propageant le long de la voie en anneau (1 b) et les transmettre aux récepteurs dans les noeuds et pour insérer des signaux lumineux dans lesdits canaux de longueur d'onde individuels, fixes et distincts, les signaux se propageant le long de la voie en anneau (1b).

8. Réseau optique WDM selon la revendication 2, **caractérisé en ce que** les équipements clients connectés aux noeuds satellites (3A, 3B, 3C), pour une réception depuis l'équipement client connecté au noeud principal (3h), sont connectés par l'intermédiaire de filtres passe-bande accordables (41), à l'exception éventuellement du dernier noeud satellite.

9. Réseau optique WDM selon la revendication 1, **caractérisé en ce qu'**il comprend des filtres d'extraction optiques "d'extraction ou non" (37) connectés de façon à permettre à l'équipement client connecté au noeud principal (3h) de transmettre à l'équipement client connecté à l'un quelconque des noeuds satellites (3A, 3B, 3C), au moyen desdits canaux de longueur d'onde individuels, fixes et distincts dans lesquels le noeud satellite respectif est agencé de façon à recevoir des signaux lumineux provenant du noeud principal (3h), les filtres "d'extraction ou non" (37) étant commandés de façon à sélectionner l'équipement client connecté à l'un des noeuds satellites qui est destiné à recevoir une transmission provenant du noeud principal.

10. Réseau optique WDM selon la revendication 9, **caractérisé en ce que** les filtres "d'extraction ou non" (37) sont connectés dans la voie en anneau (1b) dans la pluralité des noeuds satellites (3A, 3B, 3C).

11. Réseau optique WDM selon la revendication 1, **caractérisé en ce qu'**une pluralité d'équipements clients sont connectés au noeud principal (3h), chacun parmi la pluralité d'équipements clients, pour une transmission depuis l'équipement client respectif, étant connecté par l'intermédiaire d'un transmetteur accordable individuel (31), les sorties des transmetteurs accordables étant connectés à un combinateur optique (43).

12. Réseau optique WDM selon la revendication 1, **caractérisé en ce qu'**une pluralité d'équipements clients sont connectés au noeud principal (3h), chacun parmi la pluralité d'équipements clients, pour une réception des équipements clients connectés aux noeuds satellites, étant connecté par l'intermédiaire d'un filtre passe-bande accordable individuel (47), les entrées du filtre accordable étant connectées à un séparateur optique (45).

13. Réseau maillé WDM ayant des noeuds (3A, 3B, 3C, 3h) entre lesquels des signaux sont communiqués selon un schéma de trafic sensiblement maillé, **caractérisé en ce que** le réseau maillé WDM comporte un réseau optique WDM selon l'une quelconque des revendications 1 à 12.
